# EUROPÄISCHE PATENTSCHRIFT

(11) **EP 2 218 750 B1**
(45) Veröffentlichungstag und Bekanntmachung des Hinweises auf die Patenterteilung: **07.09.2016**
(21) Anmeldenummer: 10152587.1
(22) Anmeldetag: 04.02.2010
(51) Int. Cl.: C08K 5/00, C08K 5/053, C08K 5/098, C08K 5/20, C08L 21/00, B60C 1/00

(54) **KAUTSCHUKMISCHUNG MIT VERBESSERTEM ROLLWIDERSTAND**
RUBBER MIXTURE WITH IMPROVED ROLLING RESISTANCE
MÉLANGE DE CAOUTCHOUC AYANT UNE RÉSISTANCE AU ROULEMENT AMÉLIORÉE

(30) Priorität: 11.02.2009 DE 102009003464
(43) Veröffentlichungstag der Anmeldung: 18.08.2010
(73) Patentinhaber: Continental Reifen Deutschland GmbH, 30165 Hannover (DE)
(72) Erfinder: Tkachenko, Viktoriya, 30171 Hannover (DE); Müller, Norbert, 29336 Nienhagen (DE); Wagemann, Jürgen, 31162 Bad Salzdethfurth (DE)
(74) Vertreter: Finger, Karsten

(56) Entgegenhaltungen:
- EP-A1- 0 761 734
- EP-A1- 1 270 657
- EP-A1- 1 577 341
- EP-A1- 1 783 165
- EP-A1- 1 958 983
- EP-A1- 2 098 564
- EP-A1- 2 105 462

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich. Diese Eigenschaften sind auch bei technischen Gummiartikeln, wie Gurte, Riemen und Schläuche, ein wichtiges Qualitätskriterium.

Um diese Zielkonflikte zu lösen, sind schon vielfältige Ansätze verfolgt worden. So hat man beispielsweise unterschiedlichste, auch modifizierte Polymere, Harze und hochdisperse Füllstoffe für Kautschukmischungen eingesetzt und man hat versucht, die Vulkanisateigenschaften durch Modifikation der Mischungsherstellung zu beeinflussen.

Neben Kautschuk und Füllstoffen bilden die Weichmacher zum Beispiel eine Klasse von Zuschlagstoffen. Weichmacher werden Kautschukmischungen zum Teil in großen Mengen zugesetzt, um dem Mischungspreis zu senken, die Fließeigenschaften der Mischung zu verbessern (Energieeinsparung bei der Verarbeitung, Vermeidung von Energiespitzen), die Füllstoffdispersion zu verbessern, und / oder das Konfektionier- und das Klebverhalten zu verbessern. Gleichzeitig sollen sich durch diese Maßnahme natürlich die physikalischen Eigenschaften der Mischung und der daraus hergestellten Vulkanisate nicht verschlechtern.

Neben den üblicherweise in Kautschukmischungen verwendeten aromatischen, naphthenischen und paraffinischen Mineralölweichmachern gibt es verschiedene synthetische Weichmacher, die in Kautschukmischungen eingesetzt werden, wie z. B. Thioester, Phthalsäureester, aromatische Polyether, Phosphorsäureester, Sebacinsäureester oder niedrigmolekulare, polymere Polyester.

Bezüglich der Verwendung der genannten Weichmacher sind folgende Druckschriften beispielhaft für eine weitere Vielzahl zu erwähnen:
(D1) EP 0 708 137 A1
(D2) US 2002/0010275 A1
(D3) US 2002/0042462 A1
(D4) US 4,737,535
(D5) EP 1783165 A1

In der D1 werden Vulkanisate beschrieben, die zur Vermeidung des Auftretens von schwarzen Markierungen durch Abrieb und von Verfärbungen in der Ausgangskautschukmischung keine aromatischen Prozessöle enthalten, aber wenigstens einen Weichmacher (z. B. Dioctylphthalat), flüssiges Polymer und/oder Asphaltene und als Füllstoff Kieselsäure und Ruß im Volumenverhältnis 1:1 bis 20:1 aufweisen.

Aus der D2 ist bekannt, einer Laufstreifenkautschukmischung 1 bis 20 phr eines niedermolekularen Polyesterweichmachers ausgewählt aus Polyestersebacat, Triethylenglycolcaprat-caprylat, Triethylenglycoldiheptanoat, Triethylenglycoldipelargonat und Triethylenglycoldi-2-ethylhexoat hinzuzufügen, wodurch der Laufstreifen weicher gemacht und das Traktionsverhalten von Hochleistungsreifen verbessert werden soll.

Kautschukmischungen für Reifen, die zur Verbesserung der Verarbeitbarkeit ohne Nachteile in anderen Eigenschaften verstärkende Füllstoffe und einen Ester enthalten, werden in D3 offenbart. Der Ester ist dabei ausgewählt aus einem Ester einer aliphatischen, polyvalenten Carbonsäure mit einem Polyoxyalkylenderivat und einem Ester aus einer aromatischen, polyvalenten Carbonsäure mit einem Polyoxyalkylenderivat.

D4 beschreibt Reifen, die verbesserte Haftungseigenschaften, Fahrstabilität und Tieftemperatureigenschaften aufweisen sollen. Die Reifen weisen Laufstreifen aus einer Kautschukmischung auf, die 15 bis 50 phr SSBR, zumindest einen Weichmacher, ausgewählt aus einem Sebacinsäureester, einem Adipinsäureester und einem Fettsäureester, und Ruß enthält.

D5 beschreibt Kautschukmischungen mit exzellenten Anvernetzungszeiten vor der Vulkanisation und exzellentem Rollwiderstands- und Nassgriffverhalten nach der Vulkanisation. Hierzu enthält die Kautschukmischung 30 bis 100 mass% eines funktionalisierten Kautschuks, 5 bis 100 phr Kieselsäure und eine aliphatische Komponente, die eine Carboxylgruppe, eine Hydroxylgruppe, eine Aminogruppe oder eine Epoxygruppe besitzt.

Aus dem genannten Stand der Technik ist allerdings nicht hinreichend bekannt, wie sich das Rollwiderstandsverhalten, insbesondere für Fahrzeugluftreifen, Gurte und Riemen, weiter verbessern lässt.

Der Erfindung liegt daher die Aufgabe zu Grunde, eine Kautschukmischung, insbesondere für Fahrzeugluftreifen, Gurte und Riemen, bereitzustellen, die ein verbessertes Rollwiderstandsverhalten aufweist.

Gelöst wird diese Aufgabe durch eine Kautschukmischung mit folgender Zusammensetzung:
- 60 bis 100 phr zumindest eines vollständig oder teilweise funktionalisierten Styrolbutadienkautschuks und
- 0 bis 40 phr zumindest eines weiteren polaren oder unpolaren Kautschuks und
- 0,01 bis 20 phr zumindest eines Rußes und
- 30 bis 300 phr zumindest einer Kieselsäure und
- 0,1 bis 40 phr zumindest eines Mercaptosilans und
- 0,1 bis 10 phr zumindest einer Substanz A, die partiell passivierende Liganden enthält, welche die Reaktivität der funktionellen Gruppen des Styrolbutadienkautschuks beeinflussen, wobei die Substanz A ein Propandiol, ein metallfreies Fettsäureamid oder ein Kalziumsalz eines Gemisches von verschiedenen Fettsäuren ist, und
- weitere Zusatzstoffe.

Überraschenderweise wurde gefunden, dass sich durch die Kombination eines vergleichsweise hohen Anteils von 60 bis 100 phr zumindest eines teilweise oder vollständig funktionalisierten Styrolbutadienkautschuks und 0,1 bis 40 phr zumindest eines Mercaptosilans mit 0,1 bis 10 phr zumindest einer Substanz A, die partiell passivierende Liganden enthält, welche die Reaktivität der funktionellen Gruppen des Styrolbutadienkautschuks beeinflussen, und wobei die Substanz A ein Propandiol, ein metallfreies Fettsäureamid oder ein Kalziumsalz eines Gemisches von verschiedenen Fettsäuren ist, sich das Rollwiderstandsverhalten deutlich verbessern lässt. Gleichzeitig zeigen sich auch Vorteile hinsichtlich Abriebsverhaltens der erfindungsgemäßen Kautschukmischung.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung enthält 60 bis 100 phr, bevorzugt 70 bis 100 phr und besonders bevorzugt 80 bis 100 phr, zumindest eines teilweise oder vollständig funktionalisierten Styrolbutadienkautschuks. Die Funktionalisierung findet hierbei vorzugsweise durch Hydroxylgruppen und / oder Epoxygruppen und / oder Siloxangruppen und / oder Aminogruppen und / oder Phtalocyaningruppen und / oder Aminosiloxangruppen und / oder mit Carboxygruppen statt. Es kommen aber auch weitere, der fachkundigen Person bekannte Funktionalisierungen, auch als Modifizierungen bezeichnet, in Frage.

Bevorzugt ist es allerdings, wenn der Styrolbutadienkautschuk teilweise oder vollständig mit Aminosiloxangruppen funktionalisiert ist.
Es ist auch durchaus möglich, dass der Styrolbutadienkautschuk mit unterschiedlichen Gruppen funktionalisiert ist. Beispielsweise kann an jedem Kettenende eine unterschiedliche Funktionalisierung vorhanden sein.
Der Styrolbutadienkautschuk ist vorzugsweise lösungspolymerisiert (SSBR) oder emulsionspolymerisiert (ESBR). Eine Mischung aus teilweise oder vollständig funktionalisiertem SSBR mit teilweise oder vollständig funktionalisiertem ESBR ist möglich.

Weiterhin enthält die Kautschukmischung 0 bis 40 phr zumindest eines weiteren polaren oder unpolaren Kautschuk, welcher ausgewählt ist aus der Gruppe, bestehend aus natürlichem Polyisopren und / oder synthetischem Polyisopren und / oder Butadien-Kautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder Halonitrilbutylkautschuk und / oder Isopren-Butadien-Copolymer.
Es hat sich als vorteilhaft gezeigt, wenn es sich hierbei um ein natürliches (NR) oder synthetisches (IR) Polyisopren und / oder einen Butadienkautschuk (BR) handelt. Diese finden dann vorzugsweise Verwendung in Mengen von 0 bis 30 phr, wenigstens aber in Mengen von 0,1 phr, insbesondere wenigstens aber in Mengen von 0,5 phr.

Des Weiteren enthält die erfindungsgemäße Kautschukmischung 0,01 bis 20 phr, bevorzugt 1 bis 20 phr, besonders bevorzugt 5 bis 10 phr, zumindest eines Rußes. Hier kommen alle der fachkundigen Person bekannten Ruße in Frage.
In einer besonders bevorzugten Ausführungsform hat der Ruß eine Iodzahl, gemäß ASTM D 1510, die auch als Iodadsorptionszahl bezeichnet wird, größer oder gleich 75 g / kg und einer DBP-Zahl größer oder gleich 80 cm³ /100g, bevorzugt größer oder gleich 115 cm³ /100g. Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Kautschukmischung verwendet wird, es können aber auch verschiedene Russtypen in die Kautschukmischung eingemischt werden.

Die erfindungsgemäße Kautschukmischung enthält 1 - 300 phr, bevorzugt 1 - 250 phr, besonders bevorzugt 1 - 200 phr, wiederum besonders bevorzugt 30 - 200 phr, wiederum ganz besonders bevorzugt 30 -150 phr, Kieselsäure.
Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Erfindungsgemäß werden Kieselsäuren mit einer Stickstoff-Oberfläche (BET) größer oder gleich 110 m²/g, bevorzugt zwischen 115 und 300 m²/g, besonders bevorzugt zwischen 150 und 280 m²/g, und einer CTAB-Oberfläche zwischen 100 und 260 m²/g, bevorzugt zwischen 115 und 240 m²/g und besonders bevorzugt zwischen 120 und 235 m²/g, eingesetzt.

Weiterhin enthält die Kautschukmischung 0,1 bis 40 phr, bevorzugt 1 bis 15 phr, zumindest eines Mercaptosilans.
Besonders zu erwähnen sind hierbei Mercaptosilane, welche geschützt oder ungeschützt sein können, und hierbei insbesondere solche, welche sich durch eine Reduzierung der leicht flüchtigen organischen Bestandteile auszeichnen, wie sie, beispielhaft für weitere Druckschriften, in DE102005057801, WO99/09036, WO2002/048256 und WO2006/015010 zu finden sind.
Deartige Mercaptosilane sind zum Beispiel unter dem Handelsnamen Si363 von Evonik Industries erhältlich. Es können aber auch die unter den Handelsnamen bekannten NXT-, NXT low VOC- oder NXT-Z-Typen, erhältlich von Momentive Performance Materials inc., verwendet werden.

Wie bereits erwähnt führt erst die Kombination eines teilweise oder vollständig funktionalisierten Styrolbutadienkautschuks und eines Mercaptosilans mit einer Substanz A, die partiell passivierende Liganden enthält, welche die Reaktivität der funktionellen Gruppen des Styrolbutadienkautschuks beeinflussen und wobei die Substanz A ein Propandiol, ein metallfreies Fettsäureamid oder ein Kalziumsalz eines Gemisches von verschiedenen Fettsäuren ist, zu der Lösung der gestellten Aufgabe.
Die Substanz A wird in Mengen von 0,1 bis 10 phr, bevorzugt in Mengen von 1 bis 8 phr, besonders bevorzugt in Mengen von 1 bis 5 phr, verwendet.

Es können alle der fachkundigen Person bekannten Fettsäuren und / oder Fettsäureamide verwendet werden. Diese sind beispielhaft für weitere allgemein zugängliche Literatur im Römpp-Online-Chemielexikon, Version 3.3 zu finden.

Die Substanz A kann hierbei aus einer oder aus mehreren der genannten Einzelsubstanzen bestehen, d.h. dass durchaus ein Gemisch vorliegen kann.

Bei dem Propandiol kann es sich um Propan-1,3-diol, welches unter anderem auch als 1,3-Dihydroxypropan, 1,3-Propylenglyocol, Propylen-1,3-diol, 2-Deoxyglycerol oder als Trimethylenglycol bekannt ist, oder um Propan-1,2-diol, welches vorzugsweise auch als Propylenglycol bekannt ist, handeln. Bevorzugt ist allerdings die Verwendung von Propan-1,3-diol.

Es können in der Kautschukmischung noch 0 bis 25 phr, bevorzugt 0,1 bis 20 phr, zumindest eines Weichmachers vorhanden sein.
Dieser Weichmacher ist ausgewählt aus der Gruppe, bestehend aus Mineralölen und / oder synthetischen Weichmachern und / oder Harzen und / oder Faktisse und / oder Glyceriden und / oder Terpenen und / oder Saatenölen.

Bei der Verwendung von Mineralöl ist dieses bevorzugt ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle und / oder flüssige Polymer mit einem Molekulargewicht M_{w} zwischen 1500 und 10000 g / mol.
Bei der Verwendung von Saatenölen handelt es sich bevorzugt um Rapsöl und / oder um Sonnenblumenöl.

Weiterhin enthält die Kautschukmischung noch weitere Zusatzstoffe.
Weitere Zusatzstoffe beinhaltet im Wesentlichen das Vernetzungssystem (Vernetzer, Schwefelspendern und / oder elementaren Schwefel, Beschleuniger und Verzögerer), Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 - 80 phr.

Im Gesamtmengenanteil der weiteren Zusatzstoffe finden sich noch 0,1 - 10 phr, bevorzugt 0,2 - 8 phr, besonders bevorzugt 0,2 - 4 phr, Zinkoxid.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung wird vorzugsweise in Anwesenheit von elementarem Schwefel oder Schwefelspendern durchgeführt, wobei einige Schwefelspender zugleich als Vulkanisationsbeschleuniger wirken können. Elementarer Schwefel oder Schwefelspender werden im letzten Mischungsschritt in den vom Fachmann gebräuchlichen Mengen (0,4 bis 9 phr, elementarer Schwefel bevorzugt in Mengen von 0 bis 6 phr, besonders bevorzugt in Mengen von 0,1 bis 3 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Fahrzeugluftreifen, insbesondere zur Herstellung des Laufstreifens eines Reifens und / oder einer Body-Mischung eines Reifens und zur Herstellung von Riemen, Gurten und Schläuchen zu verwenden.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt. Die Herstellung der Schläuche erfolgt zumeist analog dem im Handbuch der Kautschuktechnologie, Dr. Gupta Verlag, 2001, Kapitel 13.4 beschriebenen Verfahren. Die Erfindung soll nun anhand von Vergleichs- und Ausführungsbeispielen, die in Tabellen 1a bzw. 1b und 2a bzw. 2b zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).
Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur gemäß DIN 53 505
- Spannungswerte bei 200 % Dehnung bei Raumtemperatur gemäß DIN 53 504
- Abrieb bei Raumtemperatur gemäß DIN53 516
- Verlustfaktor tan d, synonym zu tan δ, bei 55°C aus dynamisch-mechanischer Messung gemäß DIN 53 513
- dynamischer Speichermodul E' bei 55 °C gemäß DIN 53 513 bei 0 bis 12 % Dehnung

**Tabelle 1a**

| **Bestandteile** | **Einheit** | **V1** | **V2** | **V3** | **E1** |
|---|---|---|---|---|---|
| NR^{a} | phr | 5 | 5 | 5 | 5 |
| BR^{b} | phr | 15 | 15 | 15 | 15 |
| SSBR^{c} | phr | 80 | 80 | 80 | 80 |
| Ruß, N121 | phr | 5 | 5 | 5 | 5 |
| Kieselsäure^{d} | phr | 75 | 75 | 75 | 75 |
| Silan^{e} | phr | 5,4 | - | 5,4 | - |
| Mercaptosilan^{f} | phr | - | 8,9 | - | 8,9 |
| Mineralöl^{g} | phr | 13 | 13 | 13 | 13 |
| Saatenöl^{h} | phr | 5 | 5 | 5 | 5 |
| Substanz A ⁱ | phr | - | - | 3 | 3 |
| ZnO | phr | 2 | 2 | 2 | 2 |
| DPG, TBBS, Schwefel | phr | 6,6 | 6,6 | 6,6 | 6,6 |

| | | | | | |
|---|---|---|---|---|---|
| ^{a} TSR ^{b} High Cis BR, cis>90% ^{c} aminosiloxanfunktionalisierter SSBR, HPR350, JSR Corporation ^{d} Zeosil 1165MP, Fa. Rhodia ^{e} TESPD ^{f} NXT Low VOC, Momentive Performance Materials ^{g} TDAE ^{h} Rapsöl ⁱ Kalzium-Salz eines Fettsäuregemischs, Ultralube160, Performance Additives | | | | | |

**Tabelle 2a**

| **Bestandteile** | **Einheit** | **V4** | **V5** | **V6** | **E2** |
|---|---|---|---|---|---|
| NR^{a} | phr | 5 | 5 | 5 | 5 |
| BR^{b} | phr | 15 | 15 | 15 | 15 |
| SSBR^{j} | phr | 80 | 80 | 80 | 80 |
| Ruß, N121 | phr | 5 | 5 | 5 | 5 |
| Kieselsäure^{d} | phr | 75 | 75 | 75 | 75 |
| Silan^{e} | phr | 6,5 | 6,5 | - | - |
| Mercaptosilan^{l} | phr | - | - | 9 | 9 |
| Mineralöl^{g} | phr | 15 | 15 | 15 | 15 |
| Substanz A ^{k} | phr | - | 2 | - | 2 |
| ZnO | phr | 2 | 2 | 2 | 2 |
| DPG, TBBS, Schwefel | phr | 6,2 | 6,2 | 6,2 | 6,2 |

| | | | | | |
|---|---|---|---|---|---|
| ^{a} TSR ^{b} High Cis BR, cis>90% ^{j} aminosiloxanfunktionalisierter SSBR, HPR355, JSR Corporation ^{d} Zeosil 1165MP, Fa. Rhodia ^{e} TESPD ^{l} Si363, Evonik Industries ^{g} TDAE ^{k} 1,3 Propandiol, Shell Chemicals | | | | | |

**Tabelle 1b**

| **Eigenschaften** | **Einheit** | **V1** | **V2** | **V3** | **E1** |
|---|---|---|---|---|---|
| Härte | ShoreA | 70,2 | 69,8 | 70,0 | 69,5 |
| Spannungswert 200 % | MPa | 8,55 | 8,58 | 8,87 | 9,58 |
| Abrieb | mm³ | 106,4 | 106,4 | 109,3 | 92,8 |
| Normierter Abrieb | % | 100 | 100 | 97 | 115 |
| E' | | 10,4 | 10,6 | 10,5 | 9,5 |
| Tan δ | | 0,163 | 0,168 | 0,166 | 0,132 |
| Tan δ normiert | % | 100 | 97 | 98 | 124 |

**Tabelle 2b**

| **Eigenschaften** | **Einheit** | **V4** | **V5** | **V6** | **E2** |
|---|---|---|---|---|---|
| Härte | ShoreA | 68,7 | 69,4 | 65,8 | 65,1 |
| Spannungswert 200 % | MPa | 10,4 | 10,8 | 8,9 | 10,0 |
| Abrieb | mm³ | 81 | 79 | 91 | 71 |
| Normierter Abrieb | % | 100 | 103 | 88 | 112 |
| E' | | 11,1 | 10,3 | 9,2 | 8,5 |
| Tan δ | % | 0,143 | 0,140 | 0,111 | 0,106 |
| Tan δ normiert | | 100 | 102 | 122 | 126 |

Aus den Tabellen wird vor allem anhand des normierten Abriebwertes und des normierten Wertes tan δ, welcher ein Maß für das Rollwiderstandsverhalten darstellt, ersichtlich, dass sich durch die erfindungsgemäße Kautschukmischung der Rollwiderstand signifikant verbessern lässt und gleichzeitig eine deutliche Verbesserung im Abriebsverhalten zu verzeichnen ist.

## Patentansprüche

1. Kautschukmischung, **gekennzeichnet durch** folgende Zusammensetzung:
- 60 bis 100 phr zumindest eines vollständig oder teilweise funktionalisierten Styrolbutadienkautschuks und
- 0 bis 40 phr zumindest eines weiteren polaren oder unpolaren Kautschuks und
- 0,01 bis 20 phr zumindest eines Rußes und
- 1 bis 300 phr zumindest einer Kieselsäure und
- 0,1 bis 40 phr zumindest eines Mercaptosilans und
- 0,1 bis 10 phr zumindest einer Substanz A, die partiell passivierende Liganden enthält, welche die Reaktivität der funktionellen Gruppen des Styrolbutadienkautschuks beeinflussen, wobei die Substanz A ein Propandiol, ein metallfreies Fettsäureamid oder ein Kalziumsalz eines Gemisches von verschiedenen Fettsäuren ist, und
- weitere Zusatzstoffe.

2. Kautschukmischung nach Anspruch 1, **dadurch gekennzeichnet, dass** der weitere polare oder unpolare Kautschuk ausgewählt ist aus der Gruppe, bestehend aus natürlichem Polyisopren und / oder synthetischem Polyisopren und / oder Butadien-Kautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder Nitrilbutylkautschuk und / oder Isopren-Butadien-Copolymer.

3. Kautschukmischung nach Anspruch 1 oder 2, **dadurch gekennzeichnet, dass** der polare oder unpolare Kautschuk zumindest ein natürliches oder synthetisches Polyisopren und / oder ein Butadienkautschuk ist.

4. Kautschukmischung nach einem der Ansprüche 1 bis 3, **dadurch gekennzeichnet, dass** der Styrolbutadienkautschuk mit Hydroxylgruppen und / oder Epoxygruppen und / oder Siloxangruppen und / oder Aminogruppen und / oder Phtalocyaningruppen und / oder Aminosiloxangruppen und / oder mit Carboxy-Gruppen vollständig oder teilweise funktionalisiert ist.

5. Verwendung einer Kautschukmischung nach einem der Ansprüche 1 bis 4 zur Herstellung eines Reifens.

6. Verwendung einer Kautschukmischung nach Anspruch 5 zur Herstellung des Laufstreifens und / oder einer Body-Mischung eines Reifens.

7. Verwendung einer Kautschukmischung nach einem der Ansprüche 1 bis 4 zur Herstellung eines Gurtes, Riemens oder Schlauches.

## Claims

1. Rubber mixture **characterized by** the following composition:
- from 60 to 100 phr of at least one fully or partially functionalized styrene-butadiene rubber and
- from 0 to 40 phr of at least one other polar or non-polar rubber and
- from 0.1 to 20 phr of at least one carbon black and
- from 1 to 300 phr of at least one silica and
- from 0.1 to 40 phr of at least one mercaptosilane and
- from 0.1 to 10 phr of at least one substance A which comprises partially passivating ligands which influence the reactivity of the functional groups of the styrene-butadiene rubber, where the substance A is a propanediol, a metal-free fatty acid amide or a calcium salt of a mixture of various fatty acids, and
- other additives.

2. Rubber mixture according to Claim 1, **characterized in that** the other polar or non-polar rubber is selected from the group consisting of natural polyisoprene and/or synthetic polyisoprene and/or butadiene rubber and/or liquid rubbers and/or halobutyl rubber and/or polynorbornene and/or isoprene-isobutylene copolymer and/or ethylenepropylene-diene rubber and/or nitrile rubber and/or chloroprene rubber and/or acrylate rubber and/or fluororubber and/or silicone rubber and/or polysulphide rubber and/or epichlorohydrin rubber and/or styrene-isoprene-butadiene terpolymer and/or nitrile butyl rubber and/or isoprene-butadiene copolymer.

3. Rubber mixture according to Claim 1 or 2, **characterized in that** the polar or non-polar rubber is at least one natural or synthetic polyisoprene and/or a butadiene rubber.

4. Rubber mixture according to any of Claims 1 to 3, **characterized in that** the styrene-butadiene rubber has been fully or partially functionalized with hydroxy groups and/or epoxy groups and/or siloxane groups and/or amino groups and/or phthalocyanine groups and/or amino siloxane groups and/or with carboxy groups.

5. Use of a rubber mixture according to any of Claims 1 to 4 for the production of a tyre.

6. Use of a rubber mixture according to Claim 5 for the production of the tread and/or a body mixture of a tyre.

7. Use of a rubber mixture according to any of Claims 1 to 4 for the production of a hose or drive belt or other belt.

## Revendications

1. Mélange pour caoutchouc, **caractérisé par** la composition suivante :
- 60 à 100 parties par cent parties d'au moins un caoutchouc de styrène-butadiène complètement ou partiellement fonctionnalisé et
- 0 à 40 parties par cent parties d'au moins un autre caoutchouc polaire ou non polaire et
- 0,01 à 20 parties par cent parties d'au moins une suie et
- 1 à 300 parties par cent parties d'au moins une silice et
- 0,1 à 40 parties par cent parties d'au moins un mercaptosilane et
- 0,1 à 10 parties par cent parties d'au moins une substance A, qui contient des ligands partiellement passivants, qui influencent la réactivité des groupes fonctionnels du caoutchouc de styrène-butadiène, la substance A étant un propanediol, un amide d'acide gras exempt de métal ou un sel de calcium d'un mélange de tels acides gras et
- d'autres additifs.

2. Mélange pour caoutchouc selon la revendication 1, **caractérisé en ce que** l'autre caoutchouc polaire ou non polaire est choisi dans le groupe constitué par le polyisoprène naturel et/ou le polyisoprène synthétique et/ou le caoutchouc de butadiène et/ou les caoutchoucs liquides et/ou le caoutchouc d'halogénobutyle et/ou le polynorbornène et/ou un copolymère d'isoprène-isobutylène et/ou un caoutchouc d'éthylène-propylènediène et/ou un caoutchouc de nitrile et/ou un caoutchouc de chloroprène et/ou un caoutchouc d'acrylate et/ou un caoutchouc fluoré et/ou un caoutchouc de silicone et/ou un caoutchouc de polysulfure et/ou un caoutchouc d'épichlorhydrine et/ou un terpolymère de styrène-isoprène-butadiène et/ou un caoutchouc de nitrile-butyle et/ou un copolymère d'isoprène-butadiène.

3. Mélange pour caoutchouc selon la revendication 1 ou 2, **caractérisé en ce que** le caoutchouc polaire ou non polaire est au moins un polyisoprène naturel ou synthétique et/ou un caoutchouc de butadiène.

4. Mélange pour caoutchouc selon l'une quelconque des revendications 1 à 3, **caractérisé en ce que** le caoutchouc de styrène-butadiène est complètement ou partiellement fonctionnalisé par des groupes hydroxyle et/ou époxy et/ou siloxane et/ou amino et/ou phtalocyanine et/ou aminosiloxane et/ou carboxy.

5. Utilisation d'un mélange pour caoutchouc selon l'une quelconque des revendications 1 à 4 pour la fabrication d'un pneu.

6. Utilisation d'un mélange pour caoutchouc selon la revendication 5 pour la fabrication de la bande de roulement et/ou d'un mélange de carcasse d'un pneu.

7. Utilisation d'un mélange pour caoutchouc selon l'une quelconque des revendications 1 à 4 pour la fabrication d'une ceinture, d'une courroie ou d'un tuyau.
